(19) Europäisches Patentamt
European Patent Office
Office européen des brevets

(11) **EP 2 484 030 B1**

(12) **EUROPEAN PATENT SPECIFICATION**

(45) Date of publication and mention
of the grant of the patent:
**18.04.2018   Bulletin 2018/16**

(51) Int Cl.:
***G02B 6/42*** *(2006.01)*      ***G02B 6/43*** *(2006.01)*
***H04B 10/2581*** *(2013.01)*

(21) Application number: **09827021.8**

(22) Date of filing: **30.09.2009**

(86) International application number:
**PCT/RU2009/000509**

(87) International publication number:
**WO 2011/040830 (07.04.2011 Gazette 2011/14)**

(54) **OPTICAL FIBER END STRUCTURES FOR IMPROVED MULTI-MODE BANDWIDTH, AND RELATED SYSTEMS AND METHODS**

GLASFASERENDSTRUKTUREN FÜR VERBESSERTE MULTIMODE-BANDBREITE SOWIE ZUGEHÖRIGE SYSTEME UND VERFAHREN

STRUCTURES TERMINALES DE FIBRES OPTIQUES, POUR UNE MEILLEURE BANDE PASSANTE EN MULTIMODE, AINSI QUE SYSTÈMES ET PROCÉDÉS ASSOCIÉS

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**08.08.2012   Bulletin 2012/32**

(73) Proprietor: **Corning Incorporated
Corning, NY 14831 (US)**

(72) Inventors:
• **DEMERITT, Jeffery Alan
Painted Post
New York 14870 (US)**
• **KOROLEV, Andrey Evgenievich
St. Petersburg 192288 (RU)**
• **NAZAROV, Vladimir Nikolaevich
St. Petersburg 194021 (RU)**
• **SUTHERLAND, James Scott
Corning
New York 14830 (US)**

(74) Representative: **Sturm, Christoph
Quermann - Sturm - Weilnau
Patentanwälte Partnerschaft mbB
Unter den Eichen 5
65195 Wiesbaden (DE)**

(56) References cited:
EP-A1- 0 308 604      EP-A1- 1 109 041
WO-A1-03/076993      US-A- 5 163 113
US-A1- 2004 114 859   US-B1- 6 516 115

## Description

## BACKGROUND

### *Field of the Disclosure*

The technology of the disclosure relates to multi-mode optical fiber links and bandwidth of multi-mode optical fiber links.

### *Technical Background*

Optical fibers can be used to transmit or process light in a variety of applications. Examples include delivering light to or receiving light from integrated optical components or devices formed on substrates, transmitting information channels in wavelength-division multiplexed optical communication devices and systems, forming fiber optic switch matrix devices or fiber array to array connectors, and producing optical gain for optical amplification or laser oscillation. Optical fibers essentially operate as "light pipes" to confine light within the fiber boundary and transfer light from one point to another.

Optical systems can include optical elements that transmit light onto and receive light from optical fiber for light signal transfer. Alignment of these optical elements with respect to an optical fiber optimizes light signal transfer between the optical elements and the optical fiber. It may be desirable in many photonic applications to have precise alignment of optical fibers to optical elements that emit or receive light. Examples of such optical elements include optical components such as, but not limited to, semiconductor laser sources, detectors, lenses, filters, isolators, or other optical fibers. In this regard, the end of an optical fiber is positioned and aligned over an optical element on a substrate.

Alignment may be active or passive. Active alignment typically employs expensive equipment to generate and monitor optical signals to assist or confirm proper alignment. Passive alignment involves aligning optical elements by mechanical means and securing the elements in place. Regardless of whether active or passive alignment is employed, multi-mode optical fibers enable relaxed alignment tolerances between optical components and the optical fiber core. Each optical mode supported by the multi-mode optical fiber propagates down the optical fiber core at a specific launch angle relative to the optical fiber axis. Modes associated with larger launch angles in general have a longer path length and thus propagate more slowly down the optical fiber than modes associated with lower launch angles. However, when a waveform, such as a pulse for example, is launched into a multi-mode optical fiber, light is distributed among a set of modes. Since different modes generally propagate at different velocities, the pulse becomes distorted due to modal dispersion. If many pulses are launched in sequence, neighboring pulses may eventually blend into each other if the optical link is long or the pulses are generated at higher operating frequencies and are thus short and closely spaced. To mitigate modal dispersion in a multi-mode optical fiber, the clock frequency of the waveform launched into the multi-mode optical fiber may be required to be reduced. However, reducing the clock frequency of the waveform reduces the rate at which data is transmitted by the link.

An optical fiber apparatus according to the preamble of claim 1 is disclosed in the prior art document WO 03/076993 A1.

Other prior art apparatuses are known from EP 1 109 041 A1, US 5 163 113 A, US 2004/114859 A1, US 6 516 115 B1, from EP 0 308 604 A1.

## SUMMARY OF THE DETAILED DESCRIPTION

The invention provides an optical fiber apparatus according to claim 1 and a method for improving bandwidth according to claim 10.

One or more end structures can be disposed on an optical fiber end of a multi-mode optical fiber to improve link bandwidth by reducing and/or eliminating modal dispersion. Modal dispersion can be caused by higher-order modes or mode groups in an optical fiber being excited by received light. Modal dispersion can occur when mode groups with widely varying group delays are excited by the same signal. Modal dispersion can still limit the bandwidth of an optical fiber link. Further, modal dispersion increases as the length of the optical fiber increases. In certain embodiments, end structures for multi-mode optical fibers are disclosed for reducing the range of angles over which light is launched in an optical fiber to reduce the number of mode groups excited and hence to reduce modal dispersion. In other embodiments, end structures for multi-mode optical fibers are disclosed for reducing or eliminating coupling astigmatism caused by magnification of received light in two different planes of the optical fiber. In other embodiments, end structures for multi-mode optical fibers are disclosed for directing higher order modes or groups away from an optical detector to reduce or eliminate modal dispersion.

In one example, an optical fiber apparatus is disclosed and comprises a multi-mode optical fiber having a source end for receiving light. A prism structure is disposed on the source end of the multi-mode optical fiber. The prism structure in this example is designed to reduce or eliminate coupling astigmatism in order to reduce or eliminate modal dispersion. In an embodiment, an optical fiber apparatus is disclosed which comprises a multi-mode optical fiber having a source end for receiving light. A convex profile lens is disposed on either a source end, a detector end, or both a source end and a detector end of the multi-mode optical fiber. The convex profile lens is designed to counteract magnification of received light into the optical fiber to reduce launch angle thus reducing or eliminating higher-order modes or mode groups. A convex profile lens may also be disposed on a detector end of a multi-mode optical fiber to direct higher-order modes or mode groups away from an optical detector to reduce or eliminate modal dispersion. The convex profile lenses disclosed herein may be provided by disposing multiple angled-facets in an optical fiber end of an optical fiber as an example. A laser cleaving process may be employed to dispose the convex profile and/or angled-facets to form a convex profile in an optical fiber end.

Additional features and advantages will be set forth in the detailed description which follows, and in part will be readily apparent to those skilled in the art from that description or recognized by practicing the embodiments as described herein, including the detailed description that follows, the claims, as well as the appended drawings.

It is to be understood that both the foregoing general description and the following detailed description present embodiments, and are intended to provide an overview or framework for understanding the nature and character of the disclosure. The accompanying drawings are included to provide a further understanding, and are incorporated into and constitute a part of this specification. The drawings illustrate various embodiments, and together with the description serve to explain the principles and operation of the concepts disclosed.

## BRIEF DESCRIPTION OF THE FIGURES

FIG. 1 is an exemplary multi-mode optical fiber link comprised of an optical fiber disposed between an optical light source launching light into a source end of the optical fiber and an optical detector detecting the launched light at a detector end of the optical fiber;

FIG. 2A is a side view of a source end of the multi-mode optical fiber of FIG. 1;

FIG. 2B is a top view of the multi-mode optical fiber of FIG. 1;

FIG. 3 is a close-up side view of the multi-mode optical fiber of FIG. 1;

FIG. 4A is a side view of an exemplary multi-mode optical fiber having a prism structure disposed on an optical fiber end of the optical fiber to improve fiber link bandwidth;

FIG. 4B is a front view of the optical fiber of FIG. 4A;

FIG. 5 is a side view of an exemplary multi-mode optical fiber having a convex profile end disposed in an optical fiber end located adjacent an optical light source launching light into the optical fiber;

FIG. 6 is another side view of the multi-mode optical fiber of FIG. 5;

FIG. 7 is a side view of the multi-mode optical fiber of FIG. 5 having a convex end profile disposed in an optical fiber end located adjacent an optical detector;

FIG. 8 is a side view of an exemplary multi-mode optical fiber having a convex profile end disposed in an optical fiber end designed to reflect higher-order mode light away from an optical detector;

FIG. 9 is a side view of an exemplary multi-mode optical fiber having a convex end profile disposed in an optical fiber end also designed to reflect and refract higher-order mode light away from an optical detector;

FIG. 10 is a side view of an exemplary multi-mode optical fiber having a convex end profile disposed in an optical fiber end designed to refract higher-order mode light away from an optical detector;

FIG. 11 is a side view of an exemplary multi-mode optical fiber having multiple facets disposed on an optical fiber end;

FIG. 12 is a side view of an exemplary multi-mode optical fiber having a faceted end disposed on an optical fiber end and a lens structure formed on the bottom surface of the optical fiber on the optical fiber end;

FIG. 13A is a top view of an internal core of an exemplary multi-mode optical fiber having a collimating lens formed on an end of the optical fiber and receiving light from an optical light source; and

FIG. 13B is another top view of the exemplary multi-mode optical fiber of FIG. 13A illustrating the cladding and internal core of the optical fiber.

## DETAILED DESCRIPTION

Reference will now be made in detail to the embodiments, examples of which are illustrated in the accompanying drawings, in which some, but not all embodiments are shown. Indeed, the concepts may be embodied in many different forms and should not be construed as limiting herein; rather, these embodiments are provided so that this disclosure will satisfy applicable legal requirements. Whenever possible, like reference numbers will be used to refer to like components or parts.

Embodiments disclosed in the detailed description include multi-mode optical fiber apparatuses, multi-mode optical fibers, and related methods for improving fiber link bandwidth. One or more end structures can be disposed on an optical fiber end of a multi-mode optical fiber to improve link bandwidth by reducing and/or eliminating modal dispersion. Modal dispersion can be caused by optical fiber launch conditions that excite a set of modes or mode groups that have significantly different group velocities from the mean in an optical fiber. Modal dispersion can limit the bandwidth of an optical fiber link. Even in optical fiber links that are sufficiently short in length, where chromatic dispersion is not of consequence, modal dispersion can still limit the bandwidth of an optical fiber length. Further, modal dispersion can increase as the length of the optical fiber increases. In certain embodiments, end structures for multi-mode optical fibers are disclosed for reducing the range of launch angles of light in an optical fiber to reduce modal dispersion. In other embodiments, end structures for multi-mode optical fibers are disclosed for reducing or eliminating coupling astigmatism caused by magnification of received light in two different planes of the optical fiber. In other embodiments, end structures for multi-mode optical fibers are disclosed for directing higher order modes or groups away from an optical detector to reduce or eliminate modal dispersion.

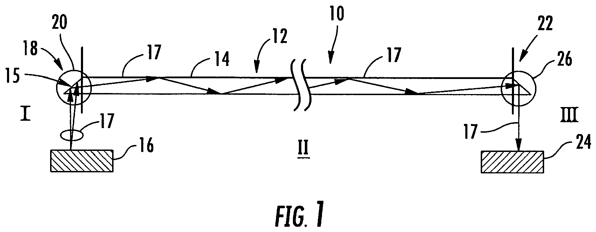

**FIG. 1** is an exemplary multi-mode optical fiber link **10**. The multi-mode optical fiber link **10** is comprised of a multi-mode optical fiber **12** which comprises an internal core **14**. The optical fiber **12** in this embodiment is multi-mode, meaning that multiple propagation paths exist in the internal core **14** defined by a launch angle due to light launched into a face **15** disposed on the internal core **14**. Only the internal core **14** is illustrated in **FIG. 1,** but it is understood that a cladding (not shown) can be provided in the optical fiber **12** to surround the internal core **14** to generally confine light within the internal core **14** as it propagates down the optical fiber **12.**

An optical light source **16** is disposed on a source end **18** of the optical fiber **12** in this embodiment to launch light **17** into the optical fiber **12** in a first zone (**I**). The light **17** is coupled from the optical light source **16** into the optical fiber **12** using total internal reflection (TIR). In this regard, the source end **18** of the optical fiber **12** is cleaved at an angle via a laser (i.e., laser-cleaved) (hereafter referred to as a cleaved fiber end **20,** or an angle-cleaved fiber end **20,** or a laser-cleaved fiber end **20**) to internally reflect the light **17** into the internal core **14** of the optical fiber **12.** The optical light source **16** may be a vertical-cavity surface-emitting laser (VCSEL) as an example, or other optical light source. The light **17** propagates down the internal core **14** of the optical fiber **12** in a second zone (**II**) until it reaches a detector end **22** of the optical fiber **12** opposite the source end **18.** Light **17** propagating down the optical fiber **12** is shown in **FIG. 1** as following a series of straight lines along the internal core **14,** as would be the case when a step-index internal core index profile is employed. These lines are also intended to represent generally non-straight paths followed by light in graded-index internal core profiles. An optical detector **24** is disposed on the detector end **22** of the optical fiber **12** to detect the light **17** propagated down the optical fiber **12.** An angle-cleaved fiber end **26** is also disposed at the detector end **22** of the optical fiber **12** to redirect the light **17** downward onto the optical detector **24** in a third zone (**III**) for detection.

Angled-cleaved fiber ends, or facets on optical fiber ends, may be formed using laser processing according to known methods for cleaving. For example, a laser cleaving station consisting of a carbon-dioxide ($CO_2$) laser with a variable beam expander and a twenty-five (25) millimeter (mm) focal length focusing lens may be used. Thus, when the optical fibers are cleaved using a laser, the optical fibers or ends of optical fibers may also be referred to as laser-cleaved fibers, or laser-cleaved ends. The laser process may be used to form an angled facet on a single optical fiber or on a group of optical fibers arranged in a one-dimensional (1-D) or two-dimensional (2-D) array. An optical fiber having a laser-cleaved end with an angle can be used for many purposes. For example, an optical detector, such as a VCSEL, emits a light beam vertically and therefore a right angle, or ninety (90) degree, turn is often necessary out of compactness considerations for certain applications. The optical fiber having a laser-cleaved end with an angle can be used to achieve the needed right angle turn of the light from the optical detector **24,** as shown above in **FIG. 1.**

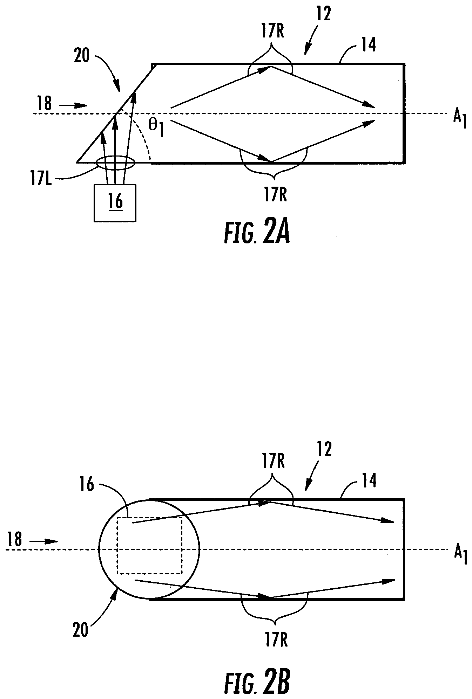

**FIGS. 2A and 2B** illustrate side and top views, respectively, of the source end **18** of the optical fiber **12** of **FIG. 1** to provide more detail regarding the angle-cleaved fiber end **20** of the optical fiber **12.** In this embodiment, the optical fiber **12** is configured to receive light **17** launched perpendicular to an optical fiber axis $A_1$ of the optical fiber **12.** The optical fiber **12** is positioned such that the angle-cleaved fiber end **20** is aligned with the optical light source **16** to receive light **17** from the optical light source **16.** The angle $\Theta_1,$ of the angle-cleaved fiber end **20** may be provided such light **17L** launched from the optical light source **16** may be reflected, via TIR reflection, at the angle-cleaved fiber end **20** and redirected down the internal core **14** of the optical fiber **12** as light **17R.** In one embodiment, the angle of the angle-cleaved fiber end **20** may be approximately forty-five (45) degrees, or other angles, relative to an optical axis $A_1$ of the optical fiber **12** to provide improved optical performance (e.g., reduced back reflection, increased bandwidth in multimode fibers, etc.). The light **17R** generally remains in the internal core **14** as it propagates along the optical fiber **12.**

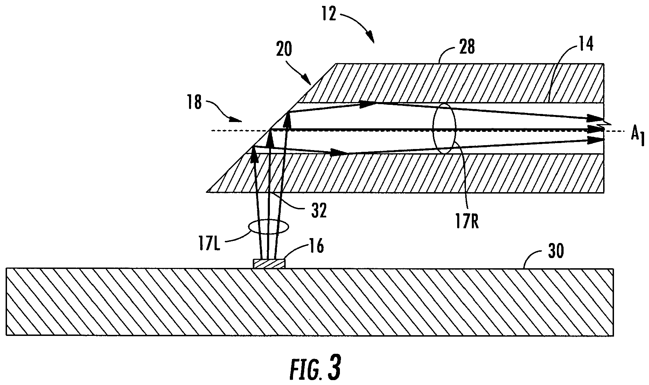

**FIG. 3** is a close-up view of the source end **18** of the optical fiber **12** of **FIG. 1** and further illustrating cladding **28** surrounding the internal core **14** of the optical fiber **12.** The optical light source **16** is disposed on a substrate **30** in this embodiment. The optical fiber **12** may be aligned with the optical light source **16** to achieve efficient light signal transfer from the optical light source **16** to the optical fiber **12.** As illustrated in **FIG. 3,** light **17L** is introduced into the optical fiber **12** from the optical light source **16** perpendicular to the optical fiber axis $A_1$ and then redirected down the optical fiber axis $A_1$ in the internal core **14** using TIR reflection at the angle-cleaved fiber end **20** of the optical fiber **12.** Since the light **17L** from the optical light source **16** is diverging, the light **17L** is launched into the internal core **14** over a range of angles. Thus, the light **17L** is launched off the angle-cleaved fiber end **20** as light **17R** at large launch angles. This can result in excitation of multiple modes or mode groups of the optical fiber **12** thereby introducing modal dispersion. A mode group is a family of light rays that have the same propagation path down the internal core **14** such that they arrive at the detector end **22** at the same time to form a group. Modal dispersion can limit the bandwidth of the optical fiber link **10.** Further, modal dispersion can increase as the length of the optical fiber **12** increases.

Before the light **17L** reaches the angle-cleaved fiber end **20,** the light **17L** from the optical light source **16** first strikes a curved, cylindrical bottom surface **32** of the cladding **28,** as illustrated in **FIG. 3.** The curved bottom surface **32** acts like a convex lens and changes the divergence angle of the light **17L** depending on the distance between the optical light source **16** and the bottom surface **32,** the radius of curvature of the cladding **28,** and the refractive index of the cladding **28.** Some of the light **17L** will be refracted inward. The light **17L** coupled into the optical fiber **12** will disperse and as a result, will launch as light **17R** at larger angles off the angle-cleaved fiber end **20,** thus tending to excite a different set of fiber modes in the optical fiber **12.** The different divergences of the modes and mode groups excited in the optical fiber **12** by the two launch planes results in additional pulse spreading that can limit high bandwidth performance. This is known as "coupling astigmatism." Coupling astigmatism can be a source of modal dispersion thus limiting the bandwidth of the optical fiber **12.** Coupling astigmatism is providing different magnifications in two or more different planes. Magnification can result in higher light beam divergence, which can result in light launches into a larger set of modes or mode groups of the optical fiber **12** thus causing modal dispersion. Higher propagation losses for modes with higher divergence may also result in an asymmetric output beam shape that is less well-matched to the shape of the optical detector **24.**

In this regard, embodiments disclosed herein provide optical structures formed on the ends of optical fibers to improve optical fiber link bandwidth. In certain embodiments, optical fiber link bandwidth is improved or not limited by limiting the modes or mode groups carrying optical link power. By controlling and limiting the modes or mode groups carrying optical link power, coupling astigmatism can be reduced or eliminated. Reducing or eliminating astigmatism can reduce modal dispersion thereby effectively increasing fiber link bandwidth.

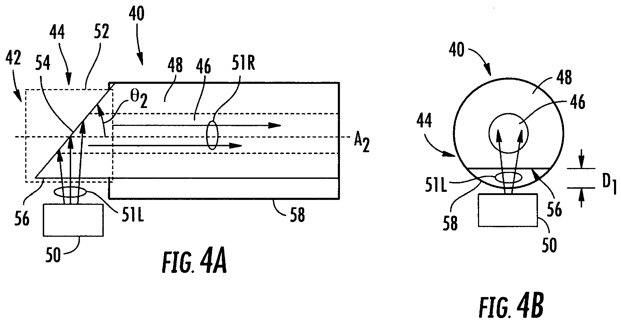

In this regard, **FIGS. 4A and 4B** illustrate side and front (or optical fiber axial) views, respectively, of one example of a multi-mode optical fiber **40** as one manner to reduce or eliminate coupling astigmatism to improve fiber link bandwidth. The multi-mode optical fiber **40** in this example has a prismatic optical fiber end structure **42** disposed on an optical fiber end **44** of the optical fiber **40.** The optical fiber **40** comprises an internal core **46** surrounded by a cladding **48.** Both the internal core **46** and cladding **48** have outer curved surfaces. The prismatic optical fiber end structure **42** improves optical fiber link bandwidth by limiting the amount of astigmatism introduced in a beam of light launched into the optical fiber **40** by an optical light source **50.** The optical light source **50** may be a VCSEL or other optical light source that can launch light **51L** into the optical fiber **40,** as previously discussed.

In this example, a prism structure **52** is formed on the optical fiber end **44** of the optical fiber **40.** The prism structure **52** is formed by disposing two planes in the optical fiber end **44.** A first planar surface **54** is disposed at an angle $\Theta_2$ with respect to an optical axis $A_2$ of the optical fiber **40** in the optical fiber end **44** to form a portion of the optical fiber end **44.** This provides TIR reflection of the light **51L** launched into the internal core **46** of the optical fiber **40,** as previously discussed. Further in this example, a second planar surface **56** is disposed on a bottom side **58** of the optical fiber end **44** through the cladding **48** and intersecting with the first planar surface **54** to form the prism structure **52.** The second planar surface **56** is disposed in a plane parallel with the optical fiber axis $A_2$ and is thus not angled with respect to the optical fiber axis $A_2$ like the first planar surface **54.** The first planar surface **54** and the second planar surface **56** form the prism structure **52.** The prism structure **52** in this example is formed on the optical fiber **40,** such that no new optical components are required, thus reducing costs. The second planar surface **56** is planar, thus resulting in less magnification than if the second planar surface **56** were a curved or cylindrical surface, such as provided by the cladding **28** in **FIG. 3.** In this manner, magnification resulting from the light **51L** passing through the cladding **48** is either reduced or eliminated, thereby reducing coupling astigmatism and modal dispersion of the light **51R** as it propagates down the optical fiber **40.** As discussed above, less magnification results in lower light divergence. Limiting light divergence results in launches that limit the number of modes or modes groups of the optical fiber **40.**

The first planar surface **54** and/or second planar surface **56** may be formed in the optical fiber end **44** via a laser cleaving process as an example, as previously discussed. For example, the first planar surface **54** and the second planar surface **56** may be formed by making a pair of laser-cleaved cuts using a $CO_2$ laser, as described above. The first planar surface **54** and the second planar surface **56** that form the prism structure **52** may be formed as two cuts provided in separate cutting processes. Alternatively, the prism structure **52** may be formed by a single process wherein the first planar surface **54** and the second planar surface **56** are created in the optical fiber end **44** simultaneously. Further, the depth $D_1$ of the cut of the second planar surface **56,** as illustrated in **FIG. 4B,** may be of any depth desired. The depth $D_1$ could be provided such that the second planar surface **56** is provided solely in the cladding **48,** as illustrated in **FIGS. 4A** and **4B.** Alternatively, the second planar surface **56** could also be disposed in a portion of the internal core **46.** The design of the prism structure **52** and fiber end shape required for optical fiber link bandwidth optimization can be set at the time of manufacture, allowing the shape of the prism structure **52** to be modified to work with a range of optical light sources and optical detectors, as desired.

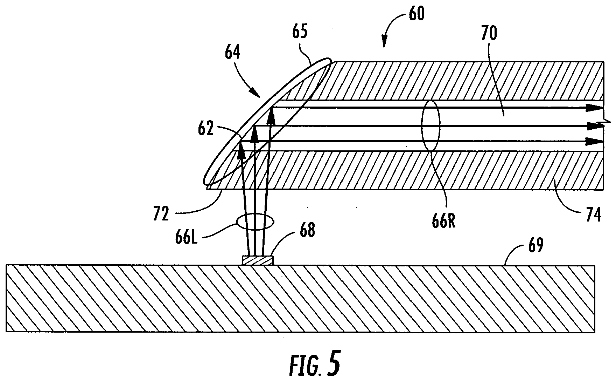

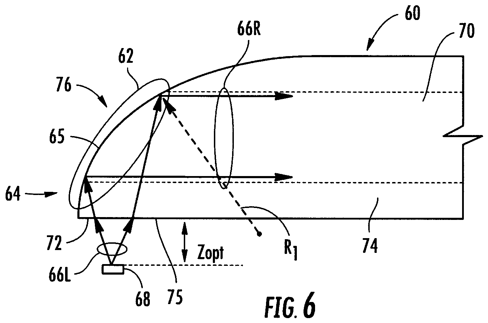

**FIG. 5** is a side view of another exemplary multi-mode optical fiber **60** having a convex profile **62** disposed on an optical fiber end **64** of the optical fiber **60** to improve optical fiber link bandwidth. In this embodiment, instead of reducing or adjusting the magnification of light before reaching a reflection surface or lens, the convex profile **62** is disposed on the optical fiber end **64** to compensate or adjust to magnification caused by light passed through a curved surface before reaching the reflection surface. In this embodiment, a bottom surface **72** of the optical fiber **60,** and more specifically a cladding **74,** along with the convex profile **62** can be used in conjunction to minimize astigmatic affects. In this embodiment, the convex profile **62** provides a convex profile lens **65** that allows light **66L** launched from an optical light source **68** to be TIR reflected in such a manner that the divergent light **66L** is collimated into collimated light **66R** directed into an internal core **70** of the optical fiber **60.** The optical fiber **60** is aligned over the optical light source **68** on a substrate **69.** In this manner, the low divergence of the collimated light **66R** will excite a lower order of modes of the optical fiber **60** thus limiting modal dispersion and increasing optical fiber link bandwidth of the optical fiber **60.** This is illustrated in further detail in **FIG. 6.**

As illustrated in **FIG. 6,** the bottom surface **72** of the cladding **74** of the optical fiber **60** acts as cylindrical lens in this embodiment. The convex profile of the cylindrical lens **65** is disposed in the optical fiber end **64** at a radius $R_1$, as illustrated in **FIG. 6.** The convex profile lens **65** may be formed at the optical fiber end **64** by disposing or cutting a convex profile **62** into the optical fiber end **64.** For example, the convex profile **62** may be disposed or cut into the optical fiber end **64** using laser processing, as previously discussed. As an example, assuming that at $Z_{opt}$ the distance between the optical light source **68** and an outer surface **75** of the cladding **74,** is one hundred twenty-five (125) micrometers ($\mu$m) in **FIG. 6,** the optical light source **68** is in the focal area of an end face **76** of the internal core **70** and $R_1$ is calculated as two times the focal area, which is approximately four hundred ninety (490) $\mu$m. If the convex profile lens **65** is profiled in two dimensions, it is also possible to provide additional correction to compensate for the magnification by the bottom surface **72** acting as a lens. The radius $R_1$ of the convex profile **62** may be reduced to minimize the effects of lateral misalignments of link bandwidth and coupling efficiency.

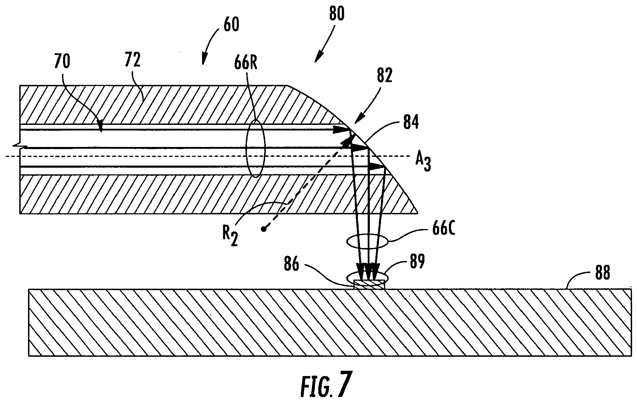

The same convex profile can also be disposed in a detector end of an optical fiber to improve coupling of the light **66L** to an optical detector. This is illustrated in **FIG. 7.** The optical fiber **60** in **FIG. 7** is the same optical fiber illustrated in **FIG. 6** in this embodiment. However, a detector end **80** of the optical fiber **60** is shown. A convex profile **82** is also disposed in the detector end **80** to form a convex profile lens **84** similar to the convex profile lens **65** illustrated in **FIG. 6.** The same end lens shaping techniques employed to provide the convex profile lens **65** in the optical fiber **60** can be employed to provide the convex profile lens **84** in the optical fiber **60** of **FIG. 6.** The TIR reflected light **66R** reaches the convex profile lens **84** and is focused from the internal core **70** as converging light **66C** down onto an optical detector **86.** The

radius $R_2$ of the curvature of the convex profile lens **84** can be selected such that the light **66R** propagating in the internal core **70** in various low-order modes is directed down to the optical detector **86.** The radius $R_2$ of the curvature may also be modified so that the optical detector **86** is illuminated by a spot that is larger than the optical detector **86.** This technique can provide accommodation for lateral misalignment of the optical fiber **60** on a substrate **88** relative to the optical detector **86.**

Astigmatic corrections described above for the optical light source launch configuration may also be applied in this embodiment. Also, the shape of an illumination spot **89** at the optical detector **86** may be modified by the convex profile lens **84** to form an elliptical illumination region to match an elliptically or nearly-elliptically shaped optical detector **86** to provide improved optical fiber link bandwidth. In assembly of fiber-to-detector interconnections, lateral misalignment tolerances in the direction parallel to an optical fiber axis $A_3$ may be different than the lateral misalignment tolerances in the direction perpendicular to the optical fiber axis $A_3$. For example, the lateral misalignment in the direction parallel to the optical fiber axis $A_3$ may be set by variations in the position of laser angle cleaving operations along the optical fiber length when considering an array of fibers. Lateral misalignment in the direction perpendicular to the optical fiber axis $A_3$ may be set by tolerances for fiber alignment V-grooves and fiber core eccentricity and cladding ellipticity. In this case, an elliptical illumination region for the optical detector **86** may be desirable to allow asymmetric compensation for dissimilar lateral misalignments that occur in directions parallel and perpendicular to the optical fiber axis $A_3$ in normal assembly.

As discussed above, the optical fiber **60** in **FIG. 6** discloses a convex profile lens formed at an optical fiber end to collimate light launched into the optical fiber so that low-order mode groups (e.g., with propagation roughly parallel to the optical fiber axis) are excited. Based on an assumption that the amount of coupling from these mode groups into higher-order mode groups (i.e., that propagate more slowly) is negligible for short optical fiber links, most of the light arriving at a source end of the optical fiber link will generally propagate in low-order mode groups generally parallel to the optical fiber axis. As the optical fiber link length is made longer, more energy is typically distributed among a larger number of mode groups with different velocities. One way to minimize modal dispersion effects at the receiver is to filter out light that propagates in certain modes or mode groups that propagate at extremely high and/or low velocities.

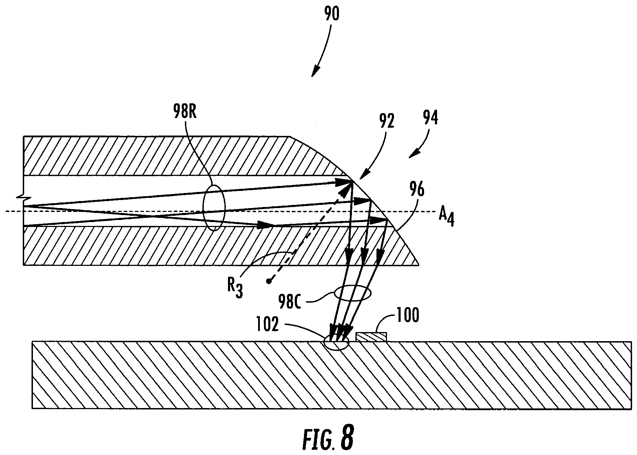

In this regard, **FIG. 8** is a side view of another exemplary multi-mode optical fiber **90** having a convex profile **92** disposed on a detector end **94** of the optical fiber **90** forming a convex profile lens **96.** The multi-mode optical fiber **90** may be the same multi-mode optical fiber **80** illustrated in **FIG. 7** wherein the convex profile **92** is the same as the convex profile **82** illustrated in **FIG. 7.**

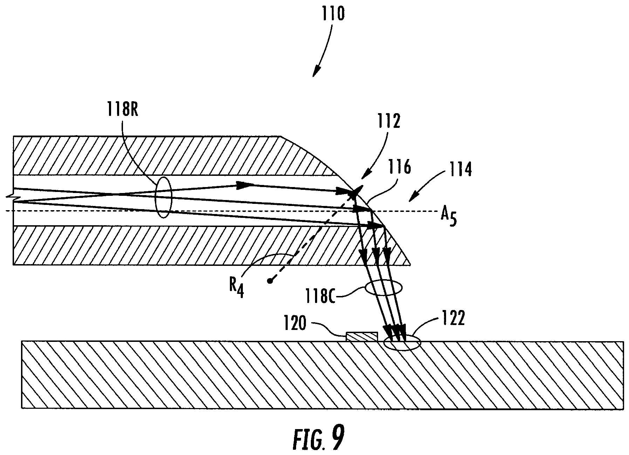

The convex profile lens **96** is illustrated in **FIG. 8** as reflecting higher-order mode light **98C** away from an optical detector **100** to improve optical fiber link bandwidth. The radius $R_3$ of the convex profile lens **96** causes light **98R** that propagates at larger positive angles relative to optical fiber axis $A_4$ to be focused in a spot **102** laterally shifted away from the optical detector **100**. This shift serves to filter out light **98R** in higher-order modes from reaching the optical detector **100**. Modal dispersion is reduced as a result thereby improving optical fiber link bandwidth. A similar result can be obtained to filter out light **98R** that propagates at larger negative angles relative to the optical fiber axis $A_4$, as illustrated in the multimode optical fiber of **FIG. 9,** discussed below.

**FIG. 9** is a side view of another exemplary multimode optical fiber **110** having a convex profile **112** disposed on a detector end **114** of the optical fiber **110** forming a convex profile lens **116** to improve optical fiber link bandwidth. Again, the multi-mode optical fiber **110** may be the same multi-mode optical fiber **80** illustrated in **FIG. 7** wherein the convex profile **112** is the same as the convex profile **82** illustrated in **FIG. 7**. The convex profile lens **116** is illustrated in **FIG. 9** as reflecting higher-order mode light **118C** away from an optical detector **120** to improve optical fiber link bandwidth. The radius $R_4$ of the convex profile lens **116** causes light **118R** that propagates at larger negative angles relative to optical fiber axis $A_5$ to be focused in a spot **122** laterally shifted away from the optical detector **120**. This shift serves to filter out light **118R** in higher-order modes from reaching the optical detector **120** to reduce modal dispersion and thereby increase optical fiber link bandwidth.

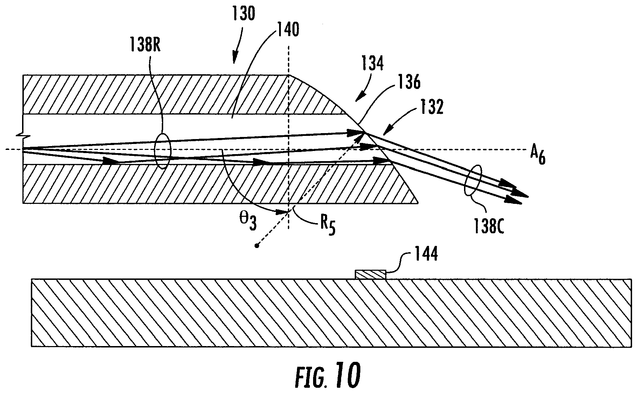

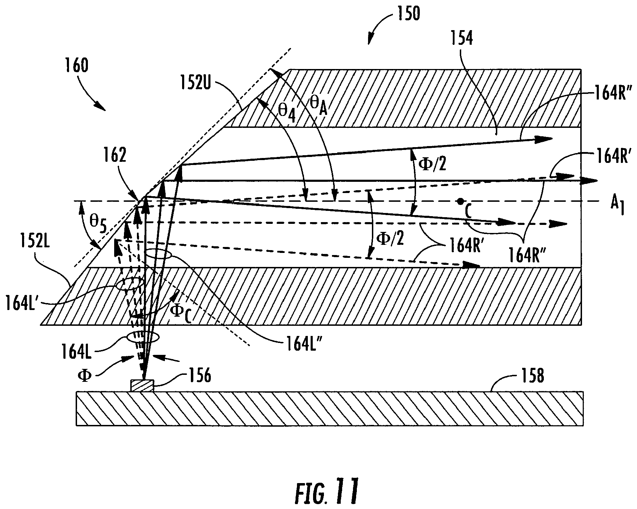

Another embodiment for filtering at least some of the higher-order modes in an optical fiber before reflected light arrives at an optical detector is illustrated in **FIG. 10. FIG. 10** is a side view of an exemplary multimode optical fiber **130** also having a convex profile **132** disposed on a detector end **134** of the optical fiber **130** forming a convex profile lens **136**. The angle $\Theta_3$ of the convex profile lens **136** relative to an optical fiber axis $A_6$ of the optical fiber **130** is made steeper relative to the optical fiber axis $A_6$ than previous convex profiles discussed above. Thus, radius $R_5$ shown in **FIG. 10** is also greater. In this manner, higher-order modes of light **138R** propagating in an internal core **140** of the optical fiber **130** at large positive angle relative to the optical fiber axis $A_5$ strike the convex profile lens **136** and refract instead of TIR reflecting as refracted light **138C** downward towards an optical detector **144**. Although not illustrated in **FIG. 10,** it is understood that the convex profile **132** would be designed to reflect lower-order modes or mode groups of light **138R** to the optical detector **144** (see, e.g., **FIG. 7**). The refracted light **138C** continues propagating forward so it completely misses the optical detector **144** in this embodiment. Even though other higher-order modes of light **138R** may be TIR reflected by the convex profile lens **136,** the elimination of at least a portion of the higher-order mode power (i.e., refracted light **138C**) can improve optical fiber link bandwidth of the optical fiber **130**. Certain embodiments discussed above provide a convex profile disposed in a source end of an optical fiber to provide a convex profile end lens in the optical fiber to collimate received light. In this manner, a low divergence of this collimated light excites a small number of modes of the optical fiber thus limiting modal dispersion and increasing optical fiber link bandwidth. Similarly, embodiments discussed above also include a convex profile disposed in a detector end of an optical fiber to provide a convex profile lens in the optical fiber to improve coupling of the reflected light to an optical detector. A convex profile lens can also be disposed in a detector end as a filter to prevent an optical detector from receiver higher-order modes of light propagated down an optical fiber. In each of these variations, a convex profile is disposed in either a source end or a detector end of an optical fiber. However, it may not be desired to provide a process to precisely provide a convex profile of an optical fiber end to form a convex profile end lens. Thus, one alternative approach to provide a convex profile end lens in an optical fiber end involves approximating the lens profile by providing two or more angled cleaves on an optical fiber end face. This is illustrated by example in the optical fiber **150** of **FIG. 11,** described below.

**FIG. 11** is a cross-sectional side view of an exemplary embodiment of an optical fiber **150** having two angled facets **152U, 152L.** The angled facets **152U, 152L** may be formed by angle-cleaving the optical fiber **150.** The optical fiber **150** has an internal core **154** aligned over an optical light source **156** on a substrate **158.** The optical fiber **150** in this embodiment is cleaved at a source end **160** of the optical fiber **150** such that the optical fiber **150** has upper angled-cleaved facet **152U** and lower angle-cleaved facet **152L.** The upper and lower angle-cleaved facets **152U** and **152L** disposed in the source end **160** of the optical fiber **150** form an approximation of a convex profile lens to collimate received light propagated in the optical fiber **150.** As discussed above, low divergence of collimated light excites a small number of modes of the optical fiber **150,** thus limiting modal dispersion and increasing optical fiber link bandwidth.

In one embodiment, the upper and lower angle-cleaved facets **152U** and **152L** are formed by making a pair of laser-cleaved cuts through a point on the detector end **160** of the optical fiber **150** using a $CO_2$ laser, as described above. In this embodiment, a first laser-cleaved cut may be at a first angle $\Theta_4$ with respect to an optical fiber axis $A_7$ of the optical fiber **150** to form the upper angle-cleaved facet **152U.** A second laser-cleaved cut is then made at a second angle $\Theta_5$ to form the lower angle-cleaved facet **152L.** It should be understood that the order of the cuts are not important, and the first laser-cleaved cut could have been at an angle with respect to the optical fiber axis $A_7$ to form the lower angle-cleaved facet **152L.**

In the embodiment of **FIG. 11,** the angle $\Theta_5$ of the lower angle-cleaved facet **152L** can be relatively steep (for example, forty-five (45) degrees or greater) with respect to the optical fiber axis $A_7$. The angle $\Theta_4$ of the upper angle-cleaved facet 152U is less than angle $\Theta_5$ in this embodiment. In addition, other methods to form the upper and lower angle-cleaved facets 152U and 152L may be used. At the end of the cleaving process, the optical fiber 150 in the embodiment, as illustrated in FIG. 11, has upper and lower angle-cleaved facets 152U and 152L such that the end of the optical fiber 150 below a point 162 is angled at $\Theta_5$ with respect to the optical fiber axis $A_7$, and the end of the optical fiber 150 above the point 162 is angled at $\Theta_4$ with respect to the optical fiber axis $A_7$.

The upper and lower angle-cleaved facets 152U and 152L on the source end 160 of the optical fiber 150 are oriented at different angles relative to light 164L launched from the optical light source 156. The light 164L may be a diverging beam of light in one embodiment. These upper and lower angle-cleaved facets 152U and 152L can be oriented so they meet and form a line that is aligned to the center C of the optical fiber 150. The upper and lower angle-cleaved facets 152U and 152L can be angled so that all light 164L striking the facets would be TIR reflected into the optical fiber 150 in this embodiment. The total angular divergence of light 164R coupled into the optical fiber 150 would be lower than the case where only a single angle-cleaved facet is provided in this example. This arrangement may improve the optical fiber link bandwidth provided by the optical fiber 150 by reducing the number of modes or mode groups.

The particular angles of the upper and lower angle-cleaved facets 152U and 152L can be determined by examining the total angular divergence $\Phi$ of light 164L emitted by the optical light source 156, as illustrated in FIG. 11. This light 164L can be divided into two sets of rays: The left set of rays 164L', at angles between -$\Phi$/2 and 0, strike the lower angle-cleaved facet 152L and are reflected as light 164R', as illustrated in FIG. 11. The right set of rays 164L", at angles between 0 and $\Phi$/2, strike the upper angle-cleaved facet 152U and are reflected as light 164R", as illustrated in FIG. 11. If $\Theta_A$, illustrated in FIG. 11, is defined as the average of lower angle-cleaved facet angle $\Theta_5$ and upper angle-cleaved facet angle $\Theta_4$, then $\Theta_5$ may be set to $\Theta_A$ + $\Phi$/4, while $\Theta_5$ may be set to $\Theta_A$ - $\Phi$/4. This approach provides that the angular divergence of rays 164R', 164" guided down the internal core 154 is $\Phi$/2, half the original total angular divergence $\Phi$ of light 164L.

The average facet angle $\Theta_A$ may be set to forty-five (45) degrees or some other angle as long as the TIR condition is maintained at both angle-cleaved facets. The TIR condition is determined by Snell's law. Snell's law states that the ratio of the sines of the angles of incidence and of refraction is a constant that depends on the media. In particular, if $\Phi_1$ is the angle of incidence and $\Phi_2$ is the angle of refraction, and $n_1$ is the index of refraction inside the fiber and $n_2$ is the index of refraction just outside the angle-cleaved facets then $n_1 \sin(\Phi_1) = n_2 \sin(\Phi_2)$. For the case of total internal reflection $\Phi_2$ = ninety (90) degrees, and the critical angle $\Phi_C$ is then given by arcsin $(n_2/n_1)$. Light must be incident on the angle-cleaved facets at an angle greater than or equal to $\Phi_C$ for light to be totally reflected by the facet. Therefore, the upper angle-cleaved facet 152U is formed at an angle $\Theta_4$ greater than or equal to $\Phi_C$, while the lower angle-cleaved facet 152L is formed at an angle $\Theta_5$ that is greater than or equal to $\Phi_C$ + $\Phi$/2. Also, $\Theta_A$ must be greater than or equal to $\Phi_C$ + $\Phi$/4. As an example, if $n_1$ = 1.455, $n_2$ = 1.0 and $\Phi$ = 20 degrees, then $\Phi_C$ = 43.4 degrees and $\Theta_4$ must be greater than or equal to 43.4 degrees in this example, while $\Theta_5$ must be greater than or equal to 53.4 degrees in this example (always maintaining $\Theta_5$ equal to $\Theta_4$ + $\Phi$/2).

In the embodiment of FIG. 11, an individual optical fiber 150 is illustrated. However, laser angle-cleaved fiber ends may be disposed or formed on individual fibers or arrays of fibers. Thus, in other embodiments, single or multiple facets may be disposed or formed on the ends of arrayed optical fibers in addition to individual optical fibers. Further, more than two facets could be disposed in an optical fiber end of the optical fiber 150. Any number of facets could be formed with selected angles so that an approximation of a convex profile is disposed in an end of an optical fiber to provide a collimating lens approximated to whatever degree is desired. There may be a diminishing margin of return in terms of bandwidth improvement when more than a certain number of facets are formed that would justify approximation of the ideal collimating lens using a small number of facets. This approach may also assist if an optical detector has sharply non-uniform near field structure which is well resolved. In this case, with centering each of N-facets with centers of N-intensive near field spots, improved coupling efficiency may be achieved for a non-uniform field while at the same time improving optical fiber link bandwidth due to the high rate of collimation. In a special case of ring-like optical detector radiation near field structure, the optical fiber 150 illustrated in FIG. 11 can be generalized to a conical cleaved end face. In this case, the center of the cone would coincide with the center of the core. The cone angle would be defined by angular divergence of optical detector radiation.

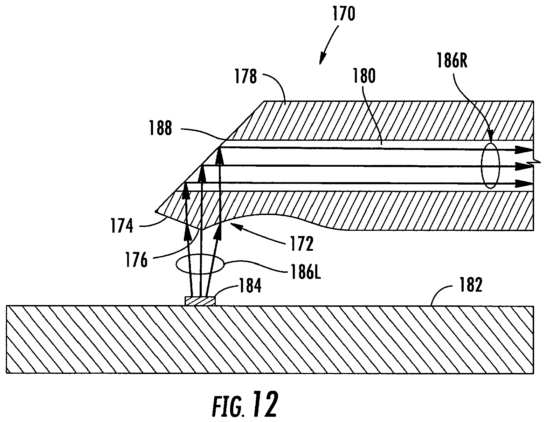

In lieu of or in addition to a convex profile or multi-faceted face disposed in an optical fiber end of an optical fiber, it is also possible to form a lens structure on the bottom surface of an optical fiber to collimate light launched from an optical detector to minimize or reduce divergence before the light is TIR reflected. Providing a lens structure in the bottom surface of the optical surface can be designed to work in conjunction with the magnification provided by a lens structure formed on a reflection surface of the optical fiber to reduce coupling astigmatism, thereby reducing modal dispersion. In this regard, FIG. 12 illustrates a side view of an exemplary multi-mode optical fiber 170 having a laser-cleaved end and a lens structure 172 formed on a bottom surface 174 of the optical fiber 170. A lens surface 176 of the lens structure

172 may be formed by a single surface shaping operation, or by forming multiple facets on the bottom surface 174 of the optical fiber 170. A cladding 178 surrounding an internal core 180 is provided in the optical fiber 170. The optical fiber 170 is mounted to a substrate 182. An optical light source 184 is also disposed on the substrate 182. Light 186L is introduced into the optical fiber 170 from the optical light source 184 using TIR reflection at an angle-cleaved end 188 of the optical fiber 170, similar to the optical fiber 12 in FIGS. 2A and 2B. However, before the light 186L reaches the angle-cleaved end 188 in this embodiment, the light 186L is collimated by the lens structure 172, as illustrated in FIG. 12. In this manner, the low divergence of the collimated light 186R will excite a lower order of modes of the optical fiber 170, thus limiting modal dispersion and increasing optical fiber link bandwidth of the optical fiber 170.

As discussed above, lenses can be used between optical light sources and optical fibers for low loss coupling. These lenses may be provided as an integral part of an optical fiber by providing a controlled profile formed on the end of an optical fiber, as discussed above. The lens collects light that diverges at a high angle from the optical light source and redirects the light into the internal core of the optical fiber. A lens structure to collimate divergent light from an optical light source may reduce the number of modes excited in the optical fiber. As previously discussed, reducing the number of excited modes reduces modal dispersion which in turns increases bandwidth performance of the optical fiber link. Lens structures provided the aforementioned embodiments were provided in configurations where light is launched into the optical fiber from an optical light source perpendicular to the optical axis of the optical fiber. However, lens structures can also be provided in other configurations, including configurations where the optical light source and/or the optical detector launch and detect light in the optical axis of the optical fiber.

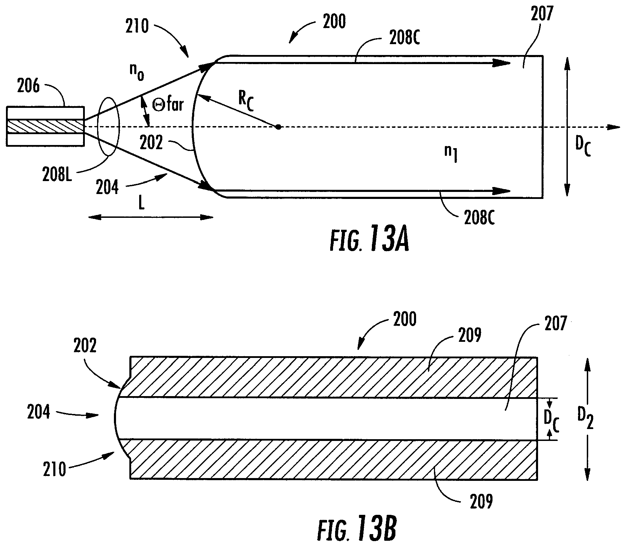

In this regard, FIGS. 13A and 13B illustrate top views of an exemplary multi-mode optical fiber 200 having a collimating lens 202 integrally formed on a source end 204 of the optical fiber 200 and receiving light from an optical light source 206. FIG. 13A shows only an internal core 207 of the optical fiber 200 while FIG. 13B shows the internal core 207 surrounded by a cladding 209 without the optical light source 206 emitting light to the optical fiber 200. As illustrated in FIG. 13A, the optical light source 206 could be a nanotaper planar lightwave circuit (PLC) waveguide, as an example, or any other type of optical light source. The collimating lens 202 is positioned between the optical light source 206 and the optical fiber 200, and more particularly the internal core 207, to reduce the divergence of light 208L launched from the optical light source 206. The internal core 207 is surrounded by the cladding 209, as illustrated in FIG. 13B. The light 208L is collimated by the collimating lens 202 into collimated light 208C. In this manner, the collimated light 208C will couple into lower modes or mode groups of the optical fiber 200 reducing modal dispersion and resulting in improved optical fiber link bandwidth. The collimating lens 202 can also be used to increase the amount of light coupled into the optical fiber 200, which may also be desirable for low-loss coupling. In this embodiment, the collimating lens 202 is disposed in the light path of the internal core 207 and a portion of the cladding 209. However, the collimating lens 202 could be exclusively disposed in the light path of the internal core 207 or the entire internal core 207 and cladding 209.

As an example, for a nanotaper PLC waveguide with a mode field diameter (MFD) of approximately one (1.0) $\mu$m, the far field angle $\Theta_{FAR}$ illustrated in FIG. 13A is calculated to be approximately twenty (20) degrees (assuming $\lambda$ = 1.31 $\mu$m). The lens focal length, which is approximately equal to working distance L, is given by:

$$L = D_C / 2\tan(\Theta_{FAR}),$$

where $D_C$ is the diameter of the internal core (see FIGS. 13A and 13B).

The radius $R_C$ of curvature of the fiber end lens is given by:

$$R_C = f(n_1 - n_o)/n_o = (n_1 - n_o)/2 \, n_o \tan(\Theta_{FAR}).$$

Calculated values for L and $R_C$ are given below for two exemplary optical fibers with different $D_C$:

- Optical fiber 1: L $\cong$ 69 $\mu$m $R_C \cong$ 34 $\mu$m
- Optical fiber 2: L $\cong$ 12.4 $\mu$m $R_C \cong$ 6$\mu$m

where it is assumed $D_C$ = 50 $\mu$m for Optical fiber 1, and $D_C$ = 9 $\mu$m for Optical fiber 2.

An optimum collimating lens for coupling collimated light to an internal fiber core depends on the type of optical fiber employed. In both exemplary cases listed above, the collimating lens radius $R_C$ of curvature is less than the diameter $D_2$ of the cladding diameter (e.g., 125 $\mu$m), but larger than core diameter $D_C$. Therefore, for every combination of the optical light source 206 and the multi-mode optical fiber 200, an optimized collimating lens 202 geometry may be calculated and employed to improve the bandwidth of the optical fiber link. It is important to note that these calculations do not include lens aberrations influence, which could also be taken into account.

The collimating lens 202 may be formed using a variety of techniques. One example includes using a glass lens that is bonded to the source end 204 or formed on the source end 204 via laser processing as illustrated in FIG. 13B. A laser written structure with focusing properties, a molded holographic lens, or other lens approaches may be employed. Astigmatic optical output from the optical light source **206** may be also compensated for and collimated.

During assembly, small lateral misalignments may occur between the optical light source **206** and the optical fiber **200.** Lateral misalignment introduces changes in the way light is coupled into the optical fiber **200,** depending on the nature of the misalignment. If the collimating lens **202** is mounted on or integrated with the optical fiber end **210,** as illustrated in **FIGS. 13A** and **13B,** a lateral misalignment of the optical fiber **200** relative to the optical light source **206** can alter the angle at which the collimated light **208C** is launched into the internal core **207.** If the lateral misalignment is large enough, the collimation angle of the collimating lens **202** may exceed the numerical aperture (NA) of the optical fiber **200** and light **208L** may not be launched into the internal core **207.** For small lateral misalignments, the angular shift may result in excitation of different modes and mode groups in the optical fiber **200.** Depending on the degree of modal dispersion induced by excitation of these different modes, link bandwidth performance could improve or degrade.

To minimize the influence of lateral misalignment on insertion loss, it may be desirable to select a collimated beam diameter $D_C$ that is less than the diameter $D_2$ of the multi-mode optical fiber core, as illustrated in **FIGS. 13A and 13B.** This approach may reduce the likelihood of clipping of the collimated light **208C.** It may also minimize the change in bandwidth by ensuring that a more constant number of modes and mode groups are excited as the collimated light **208C** experiences angular shift. For a given small optical light source **206** with fixed light **208L** divergence, a reduction in the diameter $D_C$ of the collimated light **208C** may employ a collimating lens **202** with a slightly reduced radius of curvature $R_C$. Since the collimating lens **202** focal length **L** may be reduced in this case, a slightly shorter working distance may be required.

The embodiments disclosed herein are not limited to any particular geometric structure. Any geometric prism may be used to provide a prism structure in an optical fiber end of an optical fiber to reduce coupling astigmatism. Any angle or convex shape may be disposed in an optical fiber end to collimate received light and to reduce modal dispersion. The convex shape or structure may be provided by multiple facets disposed in an optical fiber end of an optical fiber. Any number of facets may be formed in the optical fiber end desired. Further, additional curved surfaces or structures may be disposed in the bottom surface of the optical fiber to reduce coupling astigmatism solely or in conjunction with a designed profile reflection surface. A lens may also be disposed on an optical fiber end to collimate light received from an optical light source launching light along an optical fiber axis of the optical fiber. Any type of optical light source and optical detector may be employed.

As discussed above, the cleaved fiber ends disclosed herein may be disposed or formed on individual fibers or arrays of fibers using a laser-cleaving process. A polishing process to provide an angled-cleave is also possible. Single or multiple laser-cleaved facets may be disposed or formed on the ends of arrayed optical fibers in addition to individual optical fibers. An optical fiber array may be comprised of optical fibers each having an outer surface, an internal core, and a cleaved (e.g., laser-cleaved) fiber end with one or more laser-cleaved facets of the type disclosed herein. As discussed above, the optical performance of the multi-mode fiber is improved such as increasing the bandwidth and/or reducing back reflection. For instance, increasing the bandwidth of the multi-mode fiber by a factor of two or more should be achievable.

Further, as used herein, it is intended that the terms "fiber optic cables" and/or "optical fibers" include all types of single mode and multi-mode light waveguides, including one or more bare optical fibers, loose-tube optical fibers, tight-buffered optical fibers, ribbonized optical fibers, bend-insensitive optical fibers, or any other expedient of a medium for transmitting light signals. An example of a bend-insensitive optical fiber is ClearCurve® optical fiber, manufactured by Corning Incorporated.

Many modifications and other embodiments set forth herein will come to mind to one skilled in the art to which the embodiments pertain having the benefit of the teachings presented in the foregoing descriptions and the associated drawings. Therefore, it is to be understood that the description and claims are not to be limited to the specific embodiments disclosed and that modifications and other embodiments are intended to be included within the scope of the appended claims. It is intended that the embodiments cover the modifications and variations of the embodiments provided they come within the scope of the appended claims. Although specific terms are employed herein, they are used in a generic and descriptive sense only and not for purposes of limitation.

**Claims**

1. An optical fiber apparatus for improving bandwidth, comprising:

   a multi-mode optical fiber (12, 60, 90, 110, 130, 150, 170, 200) having a source end for receiving light;
   a convex profile lens (65) disposed on the source end of the multi-mode optical fiber (12, 60, 90, 110, 130, 150, 170, 200);
   an optical detector (24, 86, 100, 120, 144) located at a detector end (22, 80, 94, 114, 134, 160) of the multi-mode optical fiber (12, 60, 90, 110, 130, 150, 170, 200) in order to receive light from said optical fiber;
   **characterized by**
   a second convex profile lens (84, 96, 116, 136) disposed in the detector end (22, 80, 94, 114, 134, 160) of the multi-mode optical fiber (12, 60, 90, 110, 130, 150, 170, 200), wherein the second convex profile lens (84, 96, 116, 136) is configured to reflect or refract light in higher-order modes away from the optical detector (24, 86, 100, 120, 144).

2. The optical fiber apparatus of claim 1, wherein the convex profile lens (65) is configured to collimate received light at the source end of the multi-mode optical fiber.

3. The optical fiber apparatus of claim 1, wherein the convex profile lens (65) is configured to counteract magnification of a lens disposed in the source end of the multi-mode optical fiber, wherein the lens is provided by a cladding of the multi-mode optical fiber.

4. The optical fiber apparatus of claim 1, wherein the convex profile lens (65) is integrated into the source end of the multi-mode optical fiber.

5. The optical fiber apparatus of claim 1, wherein the convex profile lens is comprised of at least:

   a first facet (152U) disposed at a first angle to an optical fiber axis of the multi-mode optical fiber (150); and
   a second facet (152L) disposed at a second angle to the optical fiber axis of the multi-mode optical fiber (150) different from the first angle.

6. The optical fiber apparatus of claim 1, wherein the second convex profile lens (84, 96, 116, 136) is configured to reflect light exceeding a predetermined positive angle away from the focus spot of the detector end.

7. The optical fiber apparatus of claim 1, wherein the second convex profile lens (84, 96, 116, 136) is configured to shift light exceeding a predetermined negative angle away from the focus spot of the detector end.

8. The optical fiber apparatus of claim 1, wherein at least a portion of the convex profile lens is disposed in at least a portion of a cladding of the multi-mode optical fiber.

9. The optical fiber apparatus of claim 1, wherein at least a portion of the convex profile lens is disposed in at least a portion of an internal core of the multi-mode optical fiber.

10. A method of improving bandwidth of a multi-mode optical fiber, comprising:

   providing a multi-mode optical fiber (12, 60, 90, 110, 130, 150, 170, 200) having a source end for receiving light;
   disposing a convex profile lens (65) disposed on the source end of the multi-mode optical fiber (12, 60, 90, 110, 130, 150, 170, 200);
   locating an optical detector (24, 86, 100, 120, 144) at a detector end (22, 80, 94, 114, 134, 160) of the multi-mode optical fiber (12, 60, 90, 110, 130, 150, 170, 200) in order to receive light from said optical fiber;
   **characterized by**
   disposing a second convex profile lens (84, 96, 116, 136) in the detector end (22, 80, 94, 114, 134, 160) of the multi-mode optical fiber (12, 60, 90, 110, 130, 150, 170, 200), wherein the second convex profile lens (84, 96, 116, 136) is reflecting or refracting light in higher-order modes away from the optical detector (24, 86, 100, 120, 144).

11. The method of claim 10, further comprising laser cleaving the convex profile lens (65) on the source end of the multi-mode optical fiber.

12. The method of claim 10, wherein disposing the convex profile lens (65) comprises disposing the convex profile lens (65) integrally into the source end of the multi-mode optical fiber.

13. The method of claim 10, wherein disposing the convex profile lens comprises:

   disposing a first facet (152U) at a first angle to an optical fiber axis of the multi-mode optical fiber (150) at a source end of the multi-mode optical fiber (150); and
   disposing a second facet (152L) at a second angle to an optical fiber axis of the multi-mode optical fiber (150) at a source end of the multi-mode optical fiber (150) different from the first angle.

14. The method of claim 10, further comprising the second convex profile lens (84, 96, 116, 136) reflecting light exceeding a predetermined positive angle away from the focus spot of the detector end.

15. The method of claim 10, further comprising the second convex profile lens (84, 96, 116, 136) reflecting light exceeding a predetermined negative angle away from the focus spot of the detector end.

**Patentansprüche**

1. Glasfaservorrichtung zum Verbessern einer Bandbreite, die umfasst:

eine Multimoden-Glasfaser (12, 60, 90, 110, 130, 150, 170, 200), die ein Quellenende zum Empfangen von Licht aufweist; eine Linse mit konvexem Profil (65), die an dem Quellenende der Multimoden-Glasfaser (12, 60, 90, 110, 130, 150, 170, 200) angeordnet ist; einen optischen Detektor (24, 86, 100, 120, 144), der sich an einem Detektorende (22, 80, 94, 114, 134, 160) der Multimoden-Glasfaser (12, 60, 90, 110, 130, 150, 170, 200) befindet, um Licht aus der Glasfaser zu empfangen; **gekennzeichnet durch** eine zweite Linse mit konvexem Profil (84, 96, 116, 136), die in dem Detektorende (22, 80, 94, 114, 134, 160) der Multimoden-Glasfaser (12, 60, 90, 110, 130, 150, 170, 200) angeordnet ist, wobei die zweite Linse mit konvexem Profil (84, 96, 116, 136) so ausgeführt ist, dass sie Licht in Modi höherer Ordnung von dem optischen Detektor (24, 86, 100, 120, 144) weg reflektiert oder bricht.

2. Glasfaservorrichtung nach Anspruch 1, wobei die Linse mit konvexem Profil (65) so ausgeführt ist, dass sie empfangenes Licht an dem Quellenende der Multimoden-Glasfaser kollimiert.

3. Glasfaservorrichtung nach Anspruch 1, wobei die Linse mit konvexem Profil (65) so ausgeführt ist, dass sie einer Vergrößerung einer Linse, die in dem Quellenende der Multimoden-Glasfaser angeordnet ist, entgegenwirkt, wobei die Linse durch Verkleiden der Multimoden-Glasfaser geschaffen wird.

4. Glasfaservorrichtung nach Anspruch 1, wobei die Linse mit konvexem Profil (65) in das Quellenende der Multimoden-Glasfaser integriert ist.

5. Glasfaservorrichtung nach Anspruch 1, wobei die Linse mit konvexem Profil gebildet ist zumindest aus:

   einer ersten Facette (152U), die in einem ersten Winkel zu einer Glasfaserachse der Multimoden-Glasfaser (150) angeordnet ist; und einer zweiten Facette (152L), die in einem zweiten Winkel zu der Glasfaserachse der Multimoden-Glasfaser (150), der sich von dem ersten Winkel unterscheidet, angeordnet ist.

6. Glasfaservorrichtung nach Anspruch 1, wobei die zweite Linse mit konvexem Profil (84, 96, 116, 136) so ausgeführt ist, dass sie Licht, das einen vorbestimmten positiven Winkel überschreitet, von dem Brennfleck des Detektorendes weg reflektiert.

7. Glasfaservorrichtung nach Anspruch 1, wobei die zweite Linse mit konvexem Profil (84, 96, 116, 136) so ausgeführt ist, dass sie Licht, das einen vorbestimmten negativen Winkel überschreitet, von dem Brennfleck des Detektorendes weg verschiebt.

8. Glasfaservorrichtung nach Anspruch 1, wobei zumindest ein Abschnitt der Linse mit konvexem Profil zumindest in einem Abschnitt einer Verkleidung der Multimoden-Glasfaser angeordnet ist.

9. Glasfaservorrichtung nach Anspruch 1, wobei zumindest ein Abschnitt der Linse mit konvexem Profil zumindest in einem Abschnitt eines inneren Kerns der Multimoden-Glasfaser angeordnet ist.

10. Verfahren zum Verbessern einer Bandbreite einer Multimoden-Glasfaser, das umfasst:

    Bereitstellen einer Multimoden-Glasfaser (12, 60, 90, 110, 130, 150, 170, 200), die ein Quellenende zum Empfangen von Licht aufweist; Anordnen einer Linse mit konvexem Profil (65), die an dem Quellenende der Multimoden-Glasfaser (12, 60, 90, 110, 130, 150, 170, 200) angeordnet ist; Platzieren eines optischen Detektors (24, 86, 100, 120, 144) an einem Detektorende (22, 80, 94, 114, 134, 160) der Multimoden-Glasfaser (12, 60, 90, 110, 130, 150, 170, 200), um Licht aus der Glasfaser zu empfangen; **gekennzeichnet durch** Anordnen einer zweiten Linse mit konvexem Profil (84, 96, 116, 136) in dem Detektorende (22, 80, 94, 114, 134, 160) der Multimoden-Glasfaser (12, 60, 90, 110, 130, 150, 170, 200), wobei die zweite Linse mit konvexem Profil (84, 96, 116, 136) Licht in Modi höherer Ordnung von dem optischen Detektor (24, 86, 100, 120, 144) weg reflektiert oder bricht.

11. Verfahren nach Anspruch 10, das ferner ein Laserspalten der Linse mit konvexem Profil (65) an dem Quellenende der Multimoden-Glasfaser umfasst.

12. Verfahren nach Anspruch 10, wobei das Anordnen der Linse mit konvexem Profil (65) das einstückige Anordnen der Linse mit konvexem Profil (65) in dem Quellenende der Multimoden-Glasfaser umfasst.

13. Verfahren nach Anspruch 10, wobei das Anordnen der Linse mit konvexem Profil umfasst:

    Anordnen einer ersten Facette (152U) an einem Quellenende der Multimoden-Glasfaser (150) in einem ersten Winkel zu einer Glasfaserachse der Multimoden-Glasfaser (150); und Anordnen einer zweiten Facette (152L) an einem Quellenende der Multimoden-Glasfaser (150) in einem zweiten Winkel, der sich von dem ersten Winkel unterscheidet, zu einer Glasfaserachse der Multimoden-Glasfaser (150).

14. Verfahren nach Anspruch 10, das ferner umfasst, dass die zweite Linse mit konvexem Profil (84, 96, 116, 136) Licht, das einen vorbestimmten positiven Winkel überschreitet, von dem Brennfleck des Detektorendes weg reflektiert.

15. Verfahren nach Anspruch 10, das ferner umfasst, dass die zweite Linse mit konvexem Profil (84, 96, 116, 136) Licht, das einen vorbestimmten negativen Winkel überschreitet, von dem Brennfleck des Detektorendes weg reflektiert.

**Revendications**

1. Appareil à fibre optique destiné à améliorer la largeur de bande, comprenant :

   une fibre optique multimode (12, 60, 90, 110, 130, 150, 170, 200) ayant une extrémité source destinée à recevoir de la lumière ;
   une lentille au profil convexe (65) disposée sur l'extrémité source de la fibre optique multimode (12, 60, 90, 110, 130, 150, 170, 200) ;
   un détecteur optique (24, 86, 100, 120, 144) situé à une extrémité de détecteur (22, 80, 94, 114, 134, 160) de la fibre optique multimode (12, 60, 90, 110, 130, 150, 170, 200) de manière à recevoir de la lumière de ladite fibre optique ;
   **caractérisé par**
   une seconde lentille au profil convexe (84, 96, 116, 136) disposée dans l'extrémité de détecteur (22, 80, 94, 114, 134, 160) de la fibre optique multimode (12, 60, 90, 110, 130, 150, 170, 200), où la seconde lentille au profil convexe (84, 96, 116, 136) est configurée pour réfléchir ou réfracter la lumière des modes d'ordre supérieur à l'écart du détecteur optique (24, 86, 100, 120, 144).

2. Appareil à fibre optique selon la revendication 1, dans lequel la lentille au profil convexe (65) est configurée pour collimater la lumière reçue à l'extrémité source de la fibre optique multimode.

3. Appareil à fibre optique selon la revendication 1, dans lequel la lentille au profil convexe (65) est configurée pour contrecarrer le grossissement d'une lentille disposée dans l'extrémité source de la fibre optique multimode, où la lentille est pourvue par l'intermédiaire d'une gaine de la fibre optique multimode.

4. Appareil à fibre optique selon la revendication 1, dans lequel la lentille au profil convexe (65) est intégrée dans l'extrémité source de la fibre optique multimode.

5. Appareil à fibre optique selon la revendication 1, dans lequel la lentille au profil convexe est constituée d'au moins :

   une première facette (152U) disposée selon un premier angle par rapport à un axe de fibre optique de la fibre optique multimode (150) ; et
   une seconde facette (152L) disposée selon un second angle par rapport à l'axe de fibre optique de la fibre optique multimode (150), différent du premier angle.

6. Appareil à fibre optique selon la revendication 1, dans lequel la seconde lentille au profil convexe (84, 96, 116, 136) est configurée pour réfléchir de la lumière excédant un angle positif prédéterminé s'écartant du point de focalisation de l'extrémité de détecteur.

7. Appareil à fibre optique selon la revendication 1, dans lequel la seconde lentille au profil convexe (84, 96, 116, 136) est configurée pour décaler la lumière excédant un angle négatif prédéterminé s'écartant du point de focalisation de l'extrémité de détecteur.

8. Appareil à fibre optique selon la revendication 1, dans lequel au moins une partie de la lentille au profil convexe est disposée dans au moins une partie d'une gaine de la fibre optique multimode.

9. Appareil à fibre optique selon la revendication 1, dans lequel au moins une partie de la lentille au profil convexe est disposée dans au moins une partie d'un coeur interne de la fibre optique multimode.

10. Procédé destiné à améliorer la largeur de bande d'une fibre optique multimode, comprenant les étapes suivantes :

   pourvoir une fibre optique multimode (12, 60, 90, 110, 130, 150, 170, 200) ayant une extrémité source destinée à recevoir de la lumière ;
   disposer une lentille au profil convexe (65) disposée sur l'extrémité source de la fibre optique multimode (12, 60, 90, 110, 130, 150, 170, 200) ;
   positionner un détecteur optique (24, 86, 100, 120, 144) à une extrémité de détecteur (22, 80, 94, 114, 134, 160) de la fibre optique multimode (12, 60, 90, 110, 130, 150, 170, 200) afin de recevoir de la lumière de ladite fibre optique ;
   **caractérisé par** les étapes suivantes :

   disposer une seconde lentille au profil convexe (84, 96, 116, 136) dans l'extrémité de détecteur (22, 80, 94, 114, 134, 160) de la fibre optique multimode (12, 60, 90, 110, 130, 150, 170, 200), où la seconde lentille au profil convexe (84, 96, 116, 136) réfléchit ou réfracte la lumière des modes d'ordre supérieur à l'écart du détecteur optique (24, 86, 100, 116, 120, 144).

**11.** Procédé selon la revendication 10, comprenant en outre de sectionner par laser la lentille au profil convexe (65) sur l'extrémité source de la fibre optique multimode.

**12.** Procédé selon la revendication 10, dans lequel disposer la lentille au profil convexe (65) comprend de disposer intégralement la lentille au profil convexe (65) dans l'extrémité source de la fibre optique multimode.

**13.** Procédé selon la revendication 10, dans lequel disposer la lentille au profil convexe comprend les étapes suivantes :

disposer une première facette (152U) selon un premier angle par rapport à un axe de fibre optique de la fibre optique multimode (150) à une extrémité source de la fibre optique multimode (150) ; et
disposer une seconde facette (152L) selon un second angle par rapport à un axe de fibre optique de la fibre optique multimode (150) à une extrémité source de la fibre optique multimode (150), différent du premier angle.

**14.** Procédé selon la revendication 10, comprenant en outre que la seconde lentille au profil convexe (84, 96, 116, 136) réfléchisse la lumière excédant un angle positif prédéterminé s'écartant du point de focalisation de l'extrémité de détecteur.

**15.** Procédé selon la revendication 10, comprenant en outre que la seconde lentille au profil convexe (84, 96, 116, 136) réfléchisse la lumière excédant un angle négatif prédéterminé s'écartant du point de focalisation de l'extrémité de détecteur.

*FIG. 1*

**FIG. 2A**

**FIG. 2B**

FIG. 3

FIG. 4A

FIG. 4B

FIG. 5

FIG. 6

FIG. 7

FIG. 8

FIG. 9

FIG. 10

FIG. 11

FIG. 12

FIG. *13A*

FIG. *13B*

**REFERENCES CITED IN THE DESCRIPTION**

**Patent documents cited in the description**

- WO 03076993 A1
- EP 1109041 A1
- US 5163113 A
- US 2004114859 A1
- US 6516115 B1
- EP 0308604 A1